# EUROPEAN PATENT APPLICATION

(11) **EP 1 479 742 A1**
(43) Date of publication of application: **24.11.2004**
(21) Application number: 03253248.3
(22) Date of filing: 23.05.2003
(51) Int. Cl.: C09J 7/00, C09J 5/00, C09J 5/06, B05D 1/02, B41M 5/00, B41M 7/00

(54) **Adhesive deposits**

(71) Applicant: Vantico GmbH, 4057 Basel (CH)
(72) Inventor: The designation of the inventor has not yet been filed
(74) Representative: Hedley, Nicholas James Matthew

(57) **Abstract**

The present invention provides a method of forming a curable adhesive body for adhering, when cured, two parts (substrate 1 and substrate 2) together over a predetermined interface, the method comprising depositing directed droplets of at least one curable adhesive resin onto a substrate to form a deposit having at least one layer, and preferably several layers, of adhesive of predetermined shape matching the shape of the interface, the deposit having a first surface adjacent to the substrate and a second surface opposed to the first surface and wherein at least one of the said surfaces is composed of a curable adhesive resin, preferably a thermoset or photoset resin.

Because the adhesive is jetted, it can be jetted in the shape of the interface, so that it contacts and accurately bonds with both substrates.

## Description

### Technical Field

The present invention relates to the formation of adhesive deposits, for example adhesive panels or films, by jet deposition of adhesive materials or components.

### Background Art

Adhesives are increasingly being used during manufacturing in place of traditional methods of joining, for example rivets, nuts and bolts and welding. Several factors drive the use of adhesive for joining parts together during manufacture. Firstly, improved properties in adhesives allow various parts of different compositions to be joined together by a strong bond. Secondly, adhesives are lightweight, which is particularly attractive in the aerospace industry; thirdly adhesives can readily be applied at the interface between two parts to be joined without the requirement of working space behind the interface to secure the fastening, which is required for traditional fastenings, e.g. bolts and other fastenings. Fourthly, adhesives can be readily applied during the manufacturing process with minimum manual input and accordingly their use increases manufacturing speed and decreases manufacturing cost.

One problem with the application of adhesives during manufacture is to ensure that the adhesive is restricted to the interface between the parts to be joined and a minimum amount of adhesive lies outside this interface area; at the least, such excess adhesive spoils the appearance of the manufactured article but more importantly the excess adhesive can interfere with the operation of the article.

It is known to provide adhesive films of curable resin held on a backing sheet. Such films are deposited onto the backing sheet by known techniques, e.g. rotogravure printing or via a doctoring blade. The adhesive films are cut to the shape of the interface to be joined. The cut section of adhesive is placed between the parts to be joined, which are then pressed together and the adhesive is cured *in situ* to bond the parts together. Although the cut adhesive section provides an exact shape of resin body to match the interface between the parts to be joined, such a procedure results in a waste of the parts of the sheets that are not used and it is time-consuming to cut the sheets to shape.

In addition, the interface between two articles may not be of uniform thickness. If the adhesive is applied in liquid form, this is not a problem since the liquid will flow to fill the space between the two parts. However, in these circumstances, it is hard to control the amount of liquid adhesive applied so that is fills the whole of the interface between the two parts while, at the same time, not spilling out the interface into the surrounding area which, as mentioned above, is undesirable. If a cut adhesive film is used, it may not contact the whole of the interface area of the parts to be joined if the abutting surfaces of parts are not exactly complimentary in shape.

There is also now demand for improved properties from the applied adhesives. Conventional adhesive systems, e.g. one component or two component epoxy /polyurethane systems, form a homogeneous chemical network of adhesive functionality derived from the resin. The ability to produce designed/programmed adhesives in which there are located specific micro or macro domains of epoxy resin juxtaposed to structural domains, e.g. polyurethane domains, is contemplated in the method described in this patent to provide a new variety of adhesive materials. Light weight membrane adhesives are contemplated which will open up new areas of use.

### Disclosure of the Invention

The present invention overcomes or at least reduces the problems discussed above and can provides the ability to control the composition of an adhesive body that is not generally available with currently used adhesives.

According to the present invention, there is provided a method of forming a curable adhesive body for adhering, when cured, two parts together over a predetermined interface, the method comprising depositing directed droplets of at least one curable adhesive resin onto a substrate to form a deposit having at least one layer of adhesive of predetermined shape matching the shape of the said predetermined interface, the deposit having a first surface adjacent to the substrate and a second surface opposed to the first surface and wherein at least one of the said surfaces is composed of a curable adhesive resin, preferably a thermoset or photoset resin.

The adhesive shape is formed through layerwise application of the desired materials using deposition techniques that apply successive layers of material onto the substrate such as jet printing using, for example piezo print heads, or by fused deposition modelling, which is a technique that was first developed by Stratysis Corporation, in which successive layers are built up, the individual layers being formed by a flow of molten thermoplastic that is ejected though a fine nozzle. Piezo printing of liquid curable mixtures are preferred as the liquid state will ensure even mixing between deposited droplets and layers.

Layerwise deposition gives the possibility to control the shape, thickness and composition of the adhesive deposit. Thus, the composition in any one layer or between adjacent layers can be varied to provide desired properties. The shape of the individual deposited layers could be varied to give the desired overall profile of the deposit and, if it is desired to make the deposit thicker in certain areas than in others, then this can be achieved by depositing extra layers in the areas where the greater thickness is desired. In addition, it is possible to control the curing of the layers as they are deposited, e.g. with UV radiation, to give the desired degrees of curing for the layers. For example, the outer layers of the deposit should only be partly cured during manufacture so that they can be fully cured when applied to the parts being adhered to each other but it may be desirable to cure the layers in the middle of the deposit fully to give strength to the deposit. The curing of each layer as it is deposited also gives more even curing; an adhesive deposit is typically 1-3 mm and even homogenous curing through this thickness can be difficult to achieve. By depositing the adhesive in a thin layerwise fashion, each layer being, say, 1 to 30 microns thick, greater control is achieved for smooth, even curing in the final 1-3mm bond. In particular, curing after each layer or after a limited number of layers have been deposited reduces the chance cracks forming and propagating due to uneven curing, which is especially important when producing encapsulated products in e.g. the optoelectronics fields

Within any given layer or between the layers, there can be deposited predetermined domains/areas of different adhesives or other materials such as elastomers, which together provide new adhesive and other properties, e.g. flexibility, tensile strength or elongation-at-break properties. Thus the layerwise production of deposit can be done so as to grade seamlessly from one type of adhesive composition suitable for one substrate surface to another type of adhesive suitable for the second substrate surface.

It is also contemplated that voids can be included in predetermined locations within the layered adhesive deposit which could be beneficial in, for example, achieving light-weight adhesives or controlling the level of adhesion or allowing for the expansion of the adhesive deposit or the adhered parts, thereby providing expansion /stress relieving effects during e.g. heat curing or use of the adhered parts.

If not all the components for the resin deposit are deposited by the jet deposition step, the other component(s) of the resin can be deposited separately, e.g. by a further jet deposition step or as a solid or liquid coating on the substrate, as will be explained in more detail below.

The shape of the adhesive deposit formed will generally correspond to the interface between the two parts to be adhered and therefore does not result in any wasted adhesive material, as was the case with the prior art.

Jet deposition is a well-known technique for use in printing, where heads direct droplets of liquid ink, usually under the control of a computer. However, jet deposition is also known for depositing liquids other than ink, see for example US5,807,437, US-5,855,836, US-5,059,266 and US-5,140,937. Suitable jet printer heads are generally piezoelectric jet printer heads, which are available commercially, for example from Microfab Technologies Inc. of Plano, Texas, USA. Preferably, the size of the nozzle openings is the range 10 to 100 µm and/or the size of the applied droplets is in the range 5 to 100µm, although the nozzle openings may be smaller than 1µm, even as small as a few nanometres, thus allowing correspondingly sized droplets to be applied. Such droplets could be useful in the adhesion of microcomponents.

As used herein, the term "jet deposition" is intended to mean the dropwise deposition of at least one component of an adhesive onto a predetermined location on the substrate; it includes not only "classic" piezo jet deposition but also techniques such as micro-spraying during which sub-droplets are formed from directed droplets that are subjected in flight to acoustic waves which break up the droplets into even finer sub-droplets, see for example US 6,182,907 (Mitsubishi Corporation) and US 6,309,047 (Xerox Corporation). What is critical is that the jetted droplets and the droplets of the micro-spray should be directed at specific target locations on the substrate. Another technique is fusion deposition (FDM).

Droplets can be jetted at a high jet firing frequency preferably 5 to 20 KHz line frequency and preferably 60-100 KHz individual jet frequency, or even higher when the apparatus development permits; it is envisaged that future individual jet frequency may reach 300 KHz.

The jet head(s) will generally traverse backwards and forwards over the substrate, usually under the control of a computer so that the shape of the deposit will match that stored on a computer file, for example a Computer Aided Design (CAD) file. If the CAD software holds files defining the shapes of the two parts to be joined, it is straightforward to ascertain the required shape and thickness of the adhesive deposit from the shape of the two parts being joined. Thus, digital information relating to the desired shape of the adhesive deposit can be converted to a series of laminae in digital form and the digital representation of the laminae can be used to control the delivery of the jetted liquid sequentially onto successive layers of pre-deposited adhesive layers, or on a powder or liquid as described below, in order to form the adhesive deposit. The adhesive deposit is thus a layered construction, having the general shape of the substrates to be bonded, each layer may be as thin as a few microns to 20 to 30 microns.

The shape of the deposit need not be exactly the same shape as the interface between the parts since for example the adhesive may swell during curing. Such adhesives could be obtained from ring-opening compounds such as oxetanes and spiroorthoester compounds. However, the deposit can be shaped so that, on curing, the adhesive fills the interface without spilling out from the interface excessively or at all. Alternatively, if for some reason a deposit that is smaller (or larger) than the interface, that would also be within the general teaching of the present invention.

The layered, shaped adhesive deposit can be of uniform thickness or can be built up in certain areas to provide a deposit of non uniform thickness. In this way, the adhesive layer can be matched in shape to the interface between parts to provide optimum adhesion since it can make contact with the parts across the whole extent of the interface even if, at the interface, the parts do not have exactly complimentary shapes.

The invention is especially applicable when the interface and hence the resin deposit are of an irregular shape, i.e. is not a square, rectangle or circle

The adhesive body deposited by jet deposition will, at least at the surfaces that adhere to the parts, be uncured or only partly cured. When placed between the parts to be joined, it can be fully cured to adhere the parts together. Such curing will be either photocuring or thermocuring. Naturally, photocuring will be limited if the parts concerned are opaque at the wavelength required for curing. The adhesive body may include or be made of a so-called "dark curing" system, e.g. an epoxy system where the epoxy cationic curing reaction can proceed through the depth of the body once activated at the surface.

The deposit can be applied directly to a surface of one of the parts to be joined. This is particularly useful in the case where the part has been built by direct deposition of the part using jet deposition techniques, e.g. US-A-5,204,055; US-A-5,387,380; US-A-5,518,680; WO97/26302; US-A-5,902,441; WO98/09798 and WO98/28124; and WO02064354, WO02064353. It may be difficult to achieve such direct application because of the shape of the part concerned and the restrictions on the jet printing head. Accordingly, in this case, the adhesive may be deposited onto a substrate in the form of a backing sheet of release material. The exposed surface of the adhesive under the backing sheet can be applied to one of the parts to be joined, after the backing sheet has been removed; finally the adhesive is then cured by radiation and/or heat.

A further advantage of the present invention is that it is possible to alter the properties of the material in the adhesive deposit either across each of the bonding surfaces of the deposit or to provide different adhesive materials on one bonding surface as compared to the other. In connection with the latter, the adhesive surface contacting one part can have optimum properties for bonding the material of that part while the other surface of the deposit can be made of a different material that provides optimum bonding characteristics to the other part to be adhered. Furthermore, there can be graded seamless material properties from one surface to the other such that a strong bond is formed, extending from a first bonding surface, through the bulk to the other surface.

Hybrid adhesive systems containing a first and second adhesive system can also be used on any one surface. The first system may for example be an (hydroxy) acrylate system which is photocured by free radical photoinitiators (such curing will occur rapidly) to form semi-solid or solid properties providing a fast bond to the part to be adhered and the second system may be an epoxy system that requires heating and/or cationic photoinitiators to activate (but the activation takes place slowly) and provides good strength and bonding properties in the long term. Thermal curing also assists the full curing of an acrylate - epoxy system

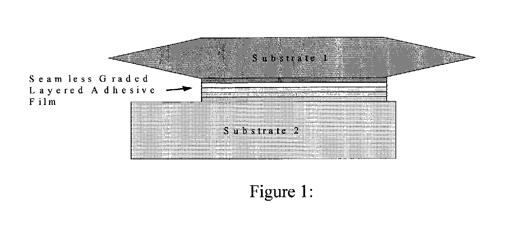

Figure 1 shows the adhesion between substrate part 1 and substrate part 2 by a layered adhesive film or body that is either deposited on one of the parts and the other part pressed against the film to bond the parts together or deposited on a release carrier substrate and applied to one of the parts; again the other part is pressed against the film to bond the parts together. Naturally, the first and second parts can be different areas of the same article so that the first and second parts need not be different articles.

The uncured or partially cured resin of the deposit will generally be flexible and can be shaped to the interface between the parts to be adhered. Thus, for example, if bonding an article within a socket, e.g. an automotive headlamp cover, the adhesive film deposit, even though deposited onto a flat backing sheet, can be flexed to conform to the inside of the socket ready to receive the object.

If the part to be bonded, e.g. the automotive headlamp cover lamp in the above example, has been made through a rapid manufacture or rapid prototype method, e.g. WO 02064354, then the layered adhesive deposit can be formed on a selected surface, during the production of the lamp, such that the adhesive deposit is located at the outermost surface of the lamp and matches the shape of a "other" part, the socket in the above example, for bonding thereto. The formed lamp can thus be directly bonded into position on the automobile. This technique is contemplated to be valuable for customised production and replacement parts required on demand.

As mentioned above, it is possible to vary micro properties across the width of the deposited adhesive or to provide discrete areas, which can be of micrometer size, of different types of adhesive, e.g. high, medium and low molecular weight adhesives or different types of adhesive. For example, if the main adhesive provides high strength bonding but requires a substantial time period to be fully cured, it may be advantageous to include a secondary adhesive, e.g. a contact adhesive that provides a bond on initial contact between the parts that are to be adhered or that requires a much shorter curing time; thus, in the short term while the main adhesive is curing, the parts do not need to be held together with an external jig. Furthermore, this technique can lead to new ways of achieving toughening effects in adhesives: certain deposited domains can be high strength curing materials whilst other deposited domains have elastomeric material properties to relieve impact fracture propagation.

The deposited adhesive may contain standard additives, e.g. photoinitiators, accelerators, promoters, stabilisers, surfactants, fillers (both inert and reactive, organic or inorganic organic for example metallic fillers, e.g. alumina, or ceramic fillers, e.g. silica), pore formers, microballoons, dyes and pigments. The deposit could also contain reactive core shell filler e.g. Albidur EP 2240, Albidur EP 2640, Albidur VE 3320, Albidur EP 5340, Albidur EP 5640, and Albiflex 296 (Hanse Chemie, Germany).

The adhesive deposit needs generally to form a cohesive solid or semi-solid deposit very shortly after deposition. The deposit can thus include a solidifying or gelling agent that will provide for this property. Alternatively, as discussed above, the jetted liquid can include two or more independent curable adhesive systems, one to provide the semi-solid or solid properties to the deposit immediately after jetting and/or to provide an initial bonding strength during curing and the second to provide the main adhesive bond between the parts being joined.

The curable jetted fluids may form the shaped adhesive directly onto a substrate, e.g. a temporary release support, or may be jetted onto a powder or liquid layer provided on the substrate, which becomes part of the final adhesive composite. The powder may be loosely adhered (e.g. by electrostatics) on the substrate. The incorporated or liquid-powder composite itself can be a hot melt adhesive at a higher temperature.

Jet deposition requires that the jetted liquid must have a viscosity within certain limits, which currently are approximately 2-30 cps at the temperature range at which it is deposited, which will generally be 20-100°C but could be higher; in the future higher viscosities may be useable. On the other hand, it is still possible to use liquid components that have a higher viscosity at room temperature by adding diluents (whether reactive or not) that reduce the viscosity of the liquid being jetted. It has also been found that the use of a diluent increases the intimate curing between the two or more components of an adhesive system and also increases the cohesion of individual jetted droplets with neighbouring droplets in the deposit, both between droplets within each layer and between droplets in adjacent layers. A reactive diluent is highly preferred since it enables the viscosity of the jetted liquid to be low and, at the same time, does not give off volatile solvents, which can harm health or the environment since it cures up as part of the adhesive.

The amount of diluent will depend on the composition of the jetted liquid. However, the diluent may be present in the jetted liquid in the range 30 to 60% by mass, such as 30 to 40%.

The diluent can also be reactive and contain or constitute, for example, reactants or materials that bring about or accelerate curing e.g. promoters, accelerators or other additives e.g. surfactants.

Should the jetted liquid (either with or without a diluent) have a viscosity at room temperature that is greater than can readily be handled by jet printing equipment, the liquid can be dispensed at an elevated temperature. Heated jetting equipment is commercially available. It has been found that delivery systems are now available which allow higher temperature jetting possibilities. Using this capability allows certain rheological advantages to be attained. Jetting liquid temperatures of up to and over 100°C may be used, for example temperatures of 65°C to 75°C. Jetting at elevated temperature has the advantage that the viscosity of the deposit increases on cooling, thereby making the deposit more coherent. Furthermore, jet depositing at elevated temperatures and high ballistic speeds (typical droplet velocities are of the order of 3 to 8 m per second) can cause the adhesive to penetrate and form interpenetrating networks within the surface of some substrates, especially plastics such as polypropylene, polycarbonates and ABS, thus resulting in greater adhesion properties: the higher the temperature and the ballistic velocity, the greater will be the penetration into the substrates and thus the better will be the adhesion.

Typically, each formed layer may be up to 300 µm in thickness, though more commonly they might be up to 200 µm. Thin layers down to 80 µm or 50 µm may be achieved and preferably even thinner layers of 30 µm or 1 µm.

Some examples of particular techniques for forming the adhesive deposit will now be discussed in further detail.

### One Component Jetting

If the components of the adhesive are stable when mixed under jetting conditions, the components of the adhesive system may be dispensed from a single jetting head (or multiple jetting heads dispensing the same composition).

The components of the adhesive system are mixed together and jet deposited under computer control layer-by-layer onto a substrate to the desired shape of deposit.

An example of such a system is a hybrid acrylic and epoxy system to produce a photo-set adhesive which is thermoset in place. Compositions such as those described in US-5,449,704 (Ciba-Geigy Corporation) are suitable, curing taking place on exposure to actinic radiation to form a heat curable film.

### Multiple Component Jetting

If the components of the adhesive are unstable when mixed under jetting conditions, the components of the adhesive system may be dispensed from separate jetting heads onto the same site on the substrate. In this way, the components of a curable resin that will react together can be kept apart until jetting. In addition, initiators, accelerators and catalysts can be kept apart from the other resin components until required to initiate or accelerate resin curing within the deposit when first formed. The viscosities and surface tensions of these multiple components will ideally be matched to allow the required wetting, mixing and reaction phenomena to occur. Thin layer deposition will help facilitate these processes further.

For example, it maybe that a first droplet is jetted and a second droplet is delivered over the first droplet as a trigger to cure the first droplet. Preferably, the active component in the second droplet may be a radiation photosensitive radical and/or cationic photoinitiator and/or a catalyst. The active component in the second liquid may comprise nano particles, either directly reactive via surface groups (such as epoxy, acrylic, hydroxy, amino etc) or contained as dispersions in an active component.

Two or more liquids maybe jetted or sprayed simultaneously from adjacent jetting or spraying printheads such that the liquids combine either in flight or immediately when they land on the substrate. This process is particularly useful for jetting/spraying traditional two component adhesive resin mixtures, which have to be held separately until in use.

### Powder Liquid Deposition

It is not necessary that all the components of the adhesive deposit are jetted onto the substrate. For example, the substrate can be formed by (a) laying down a layer of powder material and (b) jetting a liquid reagent that will react with the powder to form an adhesive onto the powder layer in a pattern that corresponds to the desired shape of the deposit; steps (a) and (b) will be repeated to form successive layers until the deposit has the desired thickness. Naturally the powder will not be cured in those areas onto which no liquid reagent is deposited. Powder that has not been reacted because no liquid has been jetted onto it, can be removed, usually after the full adhesive deposit has been formed, thereby achieving the desired shape of the deposit. This procedure will be especially useful to produce adhesive films.

The powder substantially comprises a first reactive component of an adhesive system and the liquid includes a second active component, each of the two active components being capable of either reacting with the other reactive component or facilitating the other reactive component to react with itself.

Preferably either the powder or the liquid may contain a thermo-initiator or photo-initiator and/or other additives, such as fillers, accelerators and catalysts, which act to initiate or facilitate cross-linking during the full-curing step to bond the parts.

The powder preferably undergoes rapid dissolution on contact with the liquid. This produces a viscous, practically immobile resin which will retain its shape until thermal or photo curing is performed to adhere two parts together. This may be particularly achieved when the liquid is jetted at elevated temperatures, as mentioned below.

The jetted liquid can be jetted or micro-sprayed onto the powder. Two or more liquids maybe jetted or sprayed simultaneously from adjacent jetting or spraying printheads such that the liquids combine either in flight or on/around the surface of the reactive powder.

The powder/liquid technique is particularly useful for jetting/spraying traditional two component adhesive resin mixtures, which have to be held separately until in use.

As discussed, the liquid reagent may additionally comprise a viscosity lowering diluent. The effect of the diluent is twofold. Firstly, the lowering of the viscosity enables the liquid to be jetted out of smaller bore nozzles, without the need to raise the temperature, thereby achieving a superior resolution. Secondly, it improves penetration of the liquid into the body of the powder, thereby achieving a more homogeneous distribution of the reactants while also enabling rapid aggregation of the powder improving resolution and further allowing the reactive liquid present in the jet liquid to react firmly with the surface of and interior of the powder.

Preferably, the thickness of the powder layers is in the range 0.1 to 200 µm, more preferably 0.5 to 150 µm. It is appreciated that these are scaleable properties depending on powder size, number of reactive sites, e.g. hydroxy or amino number, and swelling characteristics of the powder on addition of the diluent/curable fluid resin.

The powder can include non-curable material, e.g. fillers, microballoons e.g. Expancel™. Preferably, the reactive component represents 30 to 80% of the powder, more preferably 50 to 70%.

There are various ways in which the powder layers can be built up. For example, powder material can be supplied to an enclosure and the article is formed on a platform within the enclosure. As each successive layer is formed, the platform is lowered into the enclosure and so a fresh supply of powder is placed on the previous layer. The powder can then be levelled off to the required thickness, e.g. by a blade. In this way, the article is supported by the powder while it is being formed. Alternatively, a single layer could be formed by depositing the layer from a hopper.

The powder/liquid process is particularly useful in that it builds up relatively thick layers thereby increasing the speed at which the adhesive deposit can be formed to shape.

### Liquid-liquid deposition

The adhesive deposit may alternatively be formed in sequential layers by: (a) defining a layer of a first liquid material and (b) jet depositing a second liquid onto the first liquid layer in a pattern corresponding to the desired shape of the adhesive, the first and second liquid materials forming a curable adhesive resin, and repeating these steps (a) and (b) to form successive layers.

The first and second liquids will generally include different active components of an adhesive resin that are capable of reacting with each other to produce a partially cured deposit that can be fully cured later between two parts to be adhered, generally by heat or by radiation.

### Adhesive systems

The curable adhesive can be formed from a mixture of compounds which can undergo condensation reactions. These reactions can be:
Thermosetting Reactions Examples are epoxy and isocyanate/polyol/amine systems or epoxy/anhydride systems.
Electromagnetically Cured Cationic Systems Examples include cyclic ether compounds (epoxy, oxetane, cycloaliphatic epoxy, etc), cyclic lactones, cyclic acetal compounds, cyclic thioether compounds, spiroorthoester compounds and vinyl compounds. Cationic photo-initiator salts include diazonium, sulfonium, iodonium, ferrocenium, quinolinium and pyrylium salts.
Electromagnetically Triggered Radically Cured Systems. Examples include acrylates, methacrylates, allyl urethane, urethane acrylates, epoxy-acrylates, unsaturated polyester compounds; Radical photoinitiators are, e.g. acetophenone series, benzion series, benzophenone series, thioxanthone series, phosphine oxides, alkyl borates, alkyl triphenyl borates, iodonium salts.
Thermally Triggered Radical Reactions, e.g. peroxy with (meth) acrylates.

Preferably, the curable liquids used in the present invention comprises resins with ring opening compounds, e.g. epoxy, polyepoxy, thiiranes, aziridines, oxetanes, cyclic lactones, cyclic acetals and vinyl-ethers; polymerising compounds such as ethylenic and (metha) acrylate, hydroxyacrylates, urethane acrylates and polyacrylates; hybrid compounds, such as epoxy-acrylates, isocyanurate-epoxy, epoxy-silane advanced resins and polyurethane silanes; siloxanes containing ring opening or polymerising groups; and condensing resins such as isocyanates. The resin may be a hybrid composition of above active components. The resin layers may additionally contain additives such as fillers, reactive or not, organic fillers (e.g. core shell), inorganic fillers (glass spheres/fibres/flakes, alumina, silica, calcium carbonate etc), pigments, dyes, plasticisers, or pore formers etc.. Nanoparticles may be dispersed in the jet fluids to achieve strengthening or optical effects.

The adhesive system is preferably an epoxy-based system, which is optionally expandable (e.g. foamable), such as described in EP-0861277 and EP-1123184. In these cases, it is additionally possible to produce layered adhesives so that after production the adhesive film can be placed between the parts to be adhered, and the expanding powder composite can, when curing is initiated, fill the voids between the parts.

The active components forming the deposited adhesive can also be or comprise acrylic, amino, hydroxy-based compositions. In the case of electromagnetically activated crosslinking reactions, the adhesive will contain electromagnetic sensitive compounds, such that the electromagnetically active compound releases a crosslinking activator, e.g. a radical or acid or base, that will initiate full curing to adhere the parts together on exposure to heat or electromagnetic radiation, e.g. UV light, microwave radiation, visible light, laser beams, and light emitting diode arrays, and other similar sources.

With successive layers of the adhesive deposit, however, different materials can be used for different layers. Different liquids may also be used, either at different locations on the same layer or on different layers.

The layerwise construction of the adhesive deposit can thus be such that different liquids may be jetted/sprayed during each layer construction or in different whole layers or multi-layers, thus affording differing properties of strength and flexibility.

There is greater design freedom for the powder and first liquid used in the powder/liquid and liquid/liquid processes since there is no requirement that they are jettable. They can include solids, e.g. organic or inorganic filler.

An example of a powder useable in the powder/liquid process described above is epoxy powder such as those obtainable from Vantico Ltd, e.g. derived from PT 810 poly-epoxy and polyester compositions. The powder can include a suitably treated filler having reactivity on the surface, eg. epoxy-silane treated fillers such as silica. The powder may also comprise acrylated, epoxidised, aminated, hydroxylated organic or inorganic particles, present as such or as composite with a polymer.

The jettable curable/polymerising/crosslinkable liquids can involve compounds which can undergo condensation reactions triggered either by thermosetting reactions such as epoxy/amine or isocyanate/polyol/amine etc., or by electromagnetically triggered cationic systems such as epoxy plus cationic photo-initiators (sulfonium, iodonium or ferrocenium), salts or radically cured systems such as acrylates, urethane acrylates, epoxy-acrylates, plus radical photoinitiators, benzophenone, Irgacure 184, alkylborates iodonium salts. In the former case, the reactants can be separately included in the liquid and the powder (eg. epoxy in the liquid and amine in the powder) or vice versa, such that on jetting, the two components react to form the condensation product. In the latter case, likewise, the photo-initiators may be present in the jet liquid, or powder, separately or together with the curable resin composition.

The liquids can be epoxy, acrylic, isocyanate, epoxy-acrylates, amino, hydroxy based compositions, as neat liquids, diluted liquids or as emulsions in water. In case of electromagnetically activated crosslinking reactions, the liquid may contain electromagnetic sensitive compounds, such that on jetting the liquid, the electromagnetically active, photoinitiator compound releases the crosslinking activator, eg. a radical or acid or base.

Examples of suitable liquids are one or more of cycloaliphatic epoxy optionally with diol/triol/polyol moieties, glycidyl epoxy, epoxidised polybutadiene, aliphatic/aromatic amine, methacrylate, acrylate, styrene/substituted styrene, acrylonitrile, vinyl ether, alkenes eg. isoprene, oxetane, organic acids or esters, organic acid halides, propenyl ether epoxides, siloxane epoxy or oxetanes, allyl nopol ether epoxide, and cycloaliphatic epoxy alcohols. All of these can be mono- or multifunctional.

The layered adhesive film deposit must have a certain green strength to maintain it in shape and this can be achieved by curing a secondary resin system (e.g. a radically cured systems such as acrylates, methacrylates, allyl urethane, urethane acrylates, epoxy-acrylates, unsaturated polyester compounds, plus radical photoinitiators such as acetophenone series, benzion series, benzophenone series, thioxanthone series, phosphine oxides, alkyl triphenyl borates, iodonium salts) while leaving the primary adhesive system (e.g. di-glycidyl bis phenol A or F type) substantially uncured until it is required to form the bond between the parts.

Alternatively a hybrid of, for example, an acrylate and an epoxy is created which with amines forms a fast reaction with the acrylate (Michael adduct) leaving a secondary reaction with the epoxy for forming the ultimate bond between the parts.

The deposited layered adhesive will be cured *in situ* between the parts being adhered, generally by undergoing condensation reactions triggered either by heat (thermosetting reactions) such as epoxy/amine or isocyanate/polyol/amine etc., or by electromagnetically (e.g. by UV light), triggered cationic systems such as epoxy plus cationic photo-initiators (sulfonium, iodonium or ferrocenium), salts or radically cured systems such as acrylates, urethane acrylates, epoxy-acrylates, plus radical photoinitiators, benzophenone, Irgacure 184, alkylborates iodonium salts.

The present invention also contemplates the jetting of adhesives that lose adhesive properties when heated above a threshold, e.g. 150°C, which is useful for dismantling equipment or parts replacement.

The present invention provides a layered adhesive deposit for adhering two parts together; one of the parts may be formed in situ on the adhesive deposit, e.g. using the same jetting techniques as is used to form the adhesive. Naturally, the *in situ* formed part will not itself be a partly cured adhesive. The *in situ* formed part may, for example be a tough film coating covering the adhesive. Thus: seamless layerwise grading of the chemical constituents can be obtained , going from adhesive chemistry to chemically/thermal/etch resistant top surface open to the environment.

### EXAMPLES:

In the following Examples, the following materials are used :

| Name | Supplier | Composition |
|---|---|---|
| UVR6105 | Union Carbide | 3,4-Epoxy cyclohexy methyl-3,4-epoxy cyclohexyl carboxylate |
| UVR6000 | Union Carbide | 3-Ethyl-3-hydroxy-methyl-oxetane |
| CAP301 | Solvay | Polycaprolactone triol |
| UVI6976 | Union Carbide | Cationic photoinitiator, available as 50% solution in propylene carbonate |

### Jettable Composition:

The following components were mixed by tumbling in a glass bottle for 2 hours, under yellow light conditions

| | |
|---|---|
| UVR6105 | 50g |
| UVR6000 | 35g |
| CAP301 | 10g |
| UVI 6976 | 5g |

The liquid resin had following properties :
Viscosity [Brookfield viscometer/rate 100rpm]: 70 mPas/25°C; 8 mPas/70°C.
Surface tension was measured at 42 dynes/cm

The above UV curable composition was deposited on test substrate with a specific pattern using a single piezoelectric jet printer head from Microfab Technologies Inc, Plano, Texas, USA. The printhead was heated to 70°C under the following parameters:
Printhead Scan rate was 20mm/second
The drop density was 150 droplets/mm with a line space of 0.25mm

### Example 1: Bonding of 2 different parts

The composition was jetted onto an aluminium plate to form a smooth rectangle layer, 4cm x 1cm. The jetted layer was cured by exposure to UV light (4W, UVA, 120mJ/cm²) for 3 mins. A second layer was jetted similarly on the top of the first layer and again was cured similarly for full 3 minutes. A third layer was jetted but only partially cured for 30 seconds.

A glass slide was put on the top of adhesive layers and the whole sample was further cured by UV light for 10 mins, through the glass slide.

The aluminium plate and the glass were well bonded and could not be pulled apart..

### Example 2.

The similar procedure described in Example 1 was used to bond two glass slides

### Example 3.

Direct formation of a layered plastic part, one surface of which is bonded onto a receiving surface and the other part is formed *in situ.* Layerwise production gives control of curing (resulting in stress free film formation) and flexibility in terms of producing complex films having inserted logos or optical [e.g.. retro reflective, security] effects.

A layer of the composition was jetted in a dog-bone shape, 8cm x 1cm, on an aluminium plate. The layer was cured with the UV light for 3 mins, as described in example 1. Five further layers were deposited on the first layer and cured individually, as described. The whole assembly of 6 layers, jetted one on top of the previously jetted and cured layer, was further cured for 10 mins.

A solid dog-bone shape article was formed, firmly bonded on the surface of aluminium plate. The jetted layered assembly was highly transparent, tough (withstanding scratching with a pencil) , with a domed appearance. The D shore hardness was measured as 75 [Zwick 3100].

Using the process of this Example, it is possible to incorporate a printed layer into the article between two layers of deposit. The printed layer is therefore incorporated into the final article and, because the top layer is fully cured, it provides protection for the printed layer, which is visible. By this method, it would be possible to apply the maker's badge or logo directly onto the bonnet (hood) or boot (trunk) of a car. Alternatively, the process could be used to form a tough protective film formed over an object.

Instead of using a printed layer, one of the layers could be formed using a composition incorporating a dye or ink so that a coloured logo could be jetted with the remaining areas of the layer being formed by a composition without an ink or dye or with a differently coloured ink or dye. Thus a printed image is encapsulated within the layered assembly, e.g. for security and long term use. The layered construction achieves bonding to a surface and builds up through layers to a decoration.

Use of fluorescent pigments could yield a security feature, which lights up at night due for example to oncoming traffic lights

The overall shape of the jetted badges or films can be changed on demand in a production / manufacturing line, according to individual requirements, to change the shape of the badge or simply the internal logo, merely by changing the software that controls the jet head

This type of reflective badge or film could be used also in production of traffic signs.Optical and/or electronic components may be embedded in these layered films firmly adhered to the substrate.

### Example 4

Powder/Fluid Film Specimens Prepared by Layered Inkjet and comparison of the mechanical properties for the adhesive layers made by layering versus a mould method Procedure of Specimen Preparation
A. *Inkjet.* The composition of Example 1 was jetted onto the powder layer (Mowital B60T), which was spread on a metal plate. A Microfab single jet head at 70°C was used as the jetting device. A standard tensile bar pattern was printed. The composition was jetted in lines spaced laterally by 250µm, at a droplet density of 350 droplets/mm. The bar pattern was then cured by exposure to UV light (4W, 3mins). A further layer of powder (300µm) was spread over the previous layer, and the same procedure was repeated. This procedure was repeated further to produce a specimen with five layers, of total thickness 2mm.
   This specimen was removed from the free powder, and post cured with a more powerful UV source (Fusion F450, 120W/cm²). One pass for each side of specimen at a speed of 10 m/min.
B. *Mould.* The Mowital B30 powder was filled into a silicon mould (2 mm deep), and on this was dropped the fluid. The ratio of powder/fluid is 3/7, to be comparable with above the inkjet specimen. The part was then cured under the Fusion lamp as mentioned above. Four passes for each side at a speed of 10 m/min. The specimens were then post cured in an oven at 50°C for 2 hrs to ensure cure.
C. *Mould.* The specimen B was further thermally cured at 100°C for 1hr.

The specimens were then subjected to tensile tests, the results of which are set out in the following Table:

| Specimens | **A** | **B** | **C** |
|---|---|---|---|
| Tensile strength / MPa | 65 | 25 | 31 |
| Tensile Modulus / MPa | 2061 | 796 | 1033 |
| Elongation at Break / % | 5.3 | 5.5 | 5.7 |

As seen clearly, the layered procedure produces the highest strength film, thus having greater intra film cohesion and strength.

## Claims

1. A method of forming a curable adhesive body for adhering, when cured, two parts together over a predetermined interface, the method comprising depositing directed droplets of at least one curable adhesive resin onto a substrate to form a deposit having at least one layer of adhesive of predetermined shape matching the shape of the said predetermined interface, the deposit having a first surface adjacent to the substrate and a second surface opposed to the first surface and wherein at least one of the said surfaces is composed of a curable adhesive resin, preferably a thermoset or photoset resin.

2. A method as claimed in claim 1, wherein the said opposed first and second surfaces of the resin deposit are both composed of a curable resin adhesive, preferably a photoset or thermoset resin.

3. A method as claimed in claim 1 or claim 2, wherein the curable resin used to form the adhesive deposit:
is a thermosetting resin, e.g. epoxy/amine or isocyanate/polyol/amine resins or
is a photosetting resin cured by electromagnetic radiation, e.g. cyclic ether compounds (epoxy, oxetane, cycloaliphatic epoxy, etc), cyclic lactones, cyclic acetal compounds, cyclic thioether compounds, spiroorthoester compounds and vinyl compounds, plus at least one cationic photo-initiator salt (e.g. diazonium, sulfonium, iodonium or ferrocenium), or
is a photosetting resin cured by radicals e.g. acrylates, methacrylates, allyl urethane, urethane acrylates, epoxy-acrylates, unsaturated polyester compounds, plus at least one radical photoinitiator (e.g. acetophenone series, benzion series, benzophenone series, thioxanthone series, phosphine oxides, alkyl borates, alkyl triphenyl borates, iodonium salts) or
is a resin cured by undergoing photo-dimerisation or a Diels Alder reaction, e.g. cinnamates.

4. A method as claimed in any one of claims 1 to 3, wherein the adhesive deposit is formed by the steps of:
(a) defining a layer of a first material (e.g. a liquid or a powder) on the substrate; and
(b) depositing a liquid reagent onto to the layer of first material in a predetermined;
(c) optionally repeating steps (a) to (b) to form successive layers of adhesive.

5. A method as claimed in any one of claims 1 to 4, wherein at least one pair of adjacent adhesive resin layers have different compositions and preferaby wherein the said first and second opposed surfaces of the resin deposit are composed of different curable adhesives.

6. A method as claimed in any one of claims 1 to 5, wherein the or each layer of adhesive resin is at least partly cured after deposition.

7. A method as claimed in any one of claims 1 to 6, which includes placing a graphical element on at least one layer of adhesive resin and depositing at least one further adhesive resin layer on top of the element, wherein the at least one resin layer on one side of the element, when cured, transmits visible light whereby the element is visible through the said at least one resin layer.

8. A method as claimed in any one of claims 1 to 7, which includes depositing, preferably jet depositing, a graphical image on at least one adhesive resin layer and depositing at least one further adhesive resin layer on top of the image, wherein the at least one resin layer on one side of the image, when cured, transmits visible light whereby the image is visible through the said at least resin layer(s).

9. A method as claimed in any one of claims 1 to 8, wherein the deposition of directed droplets of curable adhesive resin comprises jet depositing the resin.

10. A method as claimed in any one of claims 1 to 9, wherein the or at least one layer of the adhesive resin comprises a plurality of domains made up of different adhesive material and/or voids.

11. A method as claimed in any one of claims 1 to 10, wherein the substrate is one part to be joined, and wherein the method further comprises pressing the at least one other part against the adhesive body and curing the resin of the adhesive body to adhere the parts together.

12. A method as claimed in claim 11, wherein the substrate is formed by depositing successive layers of curable material.

13. A method as claimed in any one of claims 1 to 10, wherein the substrate is a releasable backing sheet.

14. A method as claimed in claim 13, which further includes depositing, preferably jet depositing, a part onto the second surface of the resin deposit and curing the resin of the adhesive body adjacent to the part, whereby the part is adhered to the resin deposit.

15. A manufacturing method comprising adhering parts together over a predetermined interface using an adhesive body formed by a method as claimed in claim 13, the method comprises removing the releasable backing sheet, placing the resin deposit between the parts to be adhered, the deposit preferably having a shape matching the shape of the said predetermined interface, and curing the resin of the adhesive body to adhere the parts together.

16. A method of forming an article containing an image or pattern on a substrate, which method comprises depositing, preferably jet depositing, at least one first layer of curable resin onto the substrate, placing or forming the image or pattern on the at least one first layer and depositing, preferably jet depositing, at least one second layer of curable resin onto the image, and curing the at least one first layer and the at least on second layer, wherein the first and/or the second layers, when cured, are light transmissive, whereby the image or pattern is visible within the article.
